# EUROPEAN PATENT APPLICATION

(11) **EP 4 501 970 A1**
(43) Date of publication of application: **05.02.2025**
(21) Application number: 23189869.3
(22) Date of filing: 04.08.2023
(51) Int. Cl.: C08F 2/26, C08F 2/44, C08F 220/10, C08F 212/08, C08L 33/08, C08L 25/14, C09D 125/14, C09D 133/08

(54) **POLYMER MADE WITH PLASTIC MATERIAL, PROCESS FOR PREPARING SAID POLYMER, AND USE OF SAID POLYMER AS BINDER**

(71) Applicant: Organik Kimya Sanayi Ve Tic. A.S., 34075 Eyüp - Istanbul (TR)
(72) Inventor: Moscatelli, Davide, 34075 KEMERBURGAZ (TR); Ergun Ersen, Nur Basak, 34075 KEMERBURGAZ (TR); Kaya, Gülizar, 34075 KEMERBURGAZ (TR); Karagöz, Sevki, 34075 KEMERBURGAZ (TR); Kaslowski, Stefano, 34075 KEMERBURGAZ (TR); Demiray, Mehmet, 34075 KEMERBURGAZ (TR)
(74) Representative: Plasseraud IP

(57) **Abstract**

The present invention relates to a polymer made with plastic material by seeded emulsion polymerization. It also relates to a process for producing said polymer with a plastic material by seeded emulsion polymerization. The present invention also relates to a binder comprising the polymer of the invention or the polymer obtained according to said process, and the usage of said binder in various applications such as coating, paint, primer, ink, varnish, textile and leather additive, construction additive, paper coating, paper impregnation, and pressure sensitive adhesives.

## Description

### Technical domain of the invention

The present invention relates to a polymer made with plastic material by seeded emulsion polymerization. It also relates to a process for producing said polymer with a plastic material by seeded emulsion polymerization. The present invention also relates to the use of said polymer in various applications. The present invention also relates to a binder comprising the polymer of the invention or the polymer obtained according to said process, and the usage of said binder in various applications such as coating, paint, primer, ink, varnish, textile and leather additive, construction additive, paper coating, paper impregnation, and pressure sensitive adhesives.

### Background of the invention

One of the most important challenges of the twenty-first century is reducing the amount of plastic waste produced by people. Since the 1950s, plastic production has grown faster than any other material. It is estimated that, since the early 1950s, the amount of plastics produced is more than 8.3 billion tons.

Techniques to minimize the amount of waste polymers are extensively studied in the literature. Heating a polymer above its ceiling temperature can be considered as an alternative method for depolymerization of the polymer into its monomers. However, this procedure may result in costly investments for the industry.

Another challenge of the industry is to maintain or preferably improve the technical performances of the industrial products, including polymers.

But it's difficult to manage both challenges to have in the meantime an improvement of the technical performance and an improvement of the ecological performances. By ecological performances, we mean the reduction of the impact of the product, in its entire life cycle, on the environment. Generally, when one is improved, the other one is affected which leads to the best possible compromise between technical performances and green impact.

There is a need to find a new way to obtain polymers with improved technical properties and having lower impact on the environment.

Against all expectations, the Applicant has discovered that it is possible to reach this goal by combining the use of waste plastic in the production of polymer with a specific process of production.

### Summary of the invention

The process of the invention offers a tremendous opportunity to valorize plastic wastes at an industrial scale to produce polymers that have surprisingly improved technical performances.

The present invention relates to a polymer made with plastic material by seeded emulsion polymerization. It also relates to a process for producing said polymer with a plastic material by seeded emulsion polymerization. The present invention also relates to the use of said polymer in various applications, for example to produce coating, paint, primer, ink, adhesives such as pressure sensitive adhesive, textile and leather additive, paper additive, constructions additive. The present invention also relates to a binder comprising the polymer obtained according to said process, and the usage of said binder in various applications such as coating, paint, primer, ink, varnish, textile and leather additive, construction additive, paper coating, paper impregnation, and pressure sensitive adhesives.

### Detailed description of the invention

According to the invention, it is surprisingly possible to obtain polymers with improved performances thanks to the use of at least one plastic material during the process of production of the polymer, combined with a specific mode of polymerization which is a seeded emulsion polymerization.

The applicant has surprisingly found that the polymers produced with plastic material by this specific process have better performances when compared to polymers made by seeded emulsion polymerization without plastic material, and when compared to polymer made by emulsion polymerization (not seeded) with plastic material. The improved performances include for example the blocking resistance, the stain resistance, the scuff resistance, the matting properties.

This new way of producing polymers offers a significant advantage in terms of polymer performances, and in terms of green impact. Against all expectations, the Applicant has discovered that waste plastic material can be surprisingly used in the process of the invention without affecting the process itself and allowing an unexpected improvement of performances of the polymers.

### The seeded emulsion polymerization

A seeded emulsion polymerization is a specific mode of polymerization that comprises the use of seed polymer in an emulsion polymerization process. A seeded emulsion polymerization comprises the use of finely divided polymer particles during the emulsion polymerization. These finely divided polymer particles are called "seed polymer" because they act like a seed or a nuclei, on which the polymerization of the reactive monomers can start. The seed polymers are generally, and preferably added at the early stage of the polymerization.

A seeded emulsion polymerization is an emulsion polymerization made in the presence of seed polymers, preferably added at the beginning of the polymerization, and comprising a nucleation stage at the start of the reaction and a stabilization stage of the nuclei during the growth stage.

The invention relates to a polymer obtained by seeded emulsion polymerization with at least one ethylenically unsaturated monomer, at least one seed polymer and at least one plastic material.

The polymer may be in the form of an emulsion, a latex, or in solid form. When the polymer is in solid form, it's preferably in particles form such as powder. When the polymer is in solid form, it is generally obtained by drying the emulsion.

The polymer of the invention is preferably a styrene polymer, an acrylic polymer, a vinylic polymer, a styrene-acrylic polymer, a vinylic-acrylic polymer, a styrene-vinylic polymer, a styrene-acrylic-vinylic polymer, a fully vinylic polymer, a fully styrene polymer, or a fully acrylic polymer.

The polymer according to the invention may be linear, branched, crosslinked or have a star-shaped structure.

The invention also deals with a polymer obtained according to the process described hereafter.

The invention also relates to a process for producing a polymer by seeded emulsion polymerization comprising the polymerization of at least one ethylenically unsaturated monomer in the presence of at least one seed polymer and at least one plastic material. The process according to the invention preferably comprises the following steps:
a) Preparing a mixture comprising at least one ethylenically unsaturated monomer, at least one seed polymer, and at least one plastic material;
b) Polymerizing the resulting mixture to obtain a polymer emulsion;
c) Optionally transforming the resulting polymer emulsion into powder.

The plastic material may be added directly to the mixture, or pre-dissolved partially or totally into at least one solvent before being added into said mixture. This applies to all the process hereafter described.

The seed polymer may be produced separately from the process of the invention. It is preferably produced by emulsion polymerization. The seed polymer may also be produced during the process of the invention. In such case, the production of seed polymer is made in one step of the process. In a specific embodiment, the seed polymer is produced by polymerization of at least one ethylenically unsaturated monomer in the presence of at least one plastic material.

The process according to the invention preferably comprises the following steps:
a) Preparing a pre-mix with at least one ethylenically unsaturated monomer, and at least one plastic material;
b) Mixing at least one seed polymer with the pre-mix obtained in step a);
c) Polymerizing the resulting mixture obtained in step b) in the presence of at least one free-radical initiator to obtain a polymer emulsion.
d) Optionally transforming the resulting polymer emulsion into powder.

According to an embodiment of this process, a first alternative consists of producing the polymer composition by using a surfactant stabilization approach. In the first alternative, the pre-mix prepared in step a) also comprises at least one surfactant and at least water. Consequently, the pre-mix obtained in step a) is a pre-emulsion stabilized with the presence of the surfactant.

Accordingly, the process of the invention preferably comprises the following steps:
a) Preparing a pre-emulsion with at least one ethylenically unsaturated monomer, at least one plastic material, at least one surfactant, and water;
b) Mixing at least one seed polymer with the pre-emulsion obtained in step a);
c) Polymerizing the resulting mixture obtained in step b) in the presence of at least one free-radical initiator to obtain a polymer emulsion.
d) Optionally transforming the resulting polymer emulsion into powder.

According to another embodiment of this process, a second alternative consists of producing the polymer composition by using a colloid stabilization approach. In the second alternative, the pre-mix prepared in step a) also comprises at least one stabilizer, and optionally water. This process allows the production of a latex polymer that can be a redispersible polymer powder after the latex (or emulsion) is dried.

Accordingly, the process of the invention preferably comprises the following steps:
a) Preparing a pre-mix with at least one ethylenically unsaturated monomer, and at least one plastic material, and optionally water;
b) Mixing at least one seed polymer with the pre-mix obtained in step a);
c) Polymerizing the resulting mixture obtained in step b) in the presence of at least one free-radical initiator, water, and at least one stabilizer to obtain a polymer emulsion.
d) Optionally transforming the resulting polymer emulsion into powder.

The stabilizer is a colloidal stabilizer.

The process of the invention also encompasses multistage seeded emulsion polymerization. In the following multistage seeded emulsion polymerization process, the seed may be added at any stage a) to d), preferably during polymerization, more preferably at the beginning of the polymerization.

The present invention also relates to a multistage seeded emulsion polymerization process for producing a polymer, said process being made in the presence of at least one seed, and comprising the following successive steps:
a. Forming a first mixture comprising:
   i. water;
   ii. at least one surfactant;
   iii. at least one ethylenically unsaturated monomer;
   iv. at least one plastic material;
   v. optionally at least one crosslinking functional or multi-ethylenically unsaturated monomer;
b. Polymerizing said first mixture in the presence of at least one polymerization initiator ;
c. Forming a second mixture comprising:
   i. at least the product obtained in the step b;
   ii. at least water;
   iii. at least one surfactant;
   iv. at least one ethylenically unsaturated monomer;
   v. optionally at least one plastic material;
   vi. optionally at least one crosslinking functional or multi-ethylenically unsaturated monomer;
d. Polymerizing said second mixture in the presence of at least one polymerization initiator to obtain a polymer emulsion;
e. Optionally transforming the resulting polymer emulsion into powder.

The present invention also relates to a multistage seeded emulsion polymerization process for producing a polymer, said process being made in the presence of at least one seed, and comprising the following successive steps:
a. Forming a first mixture comprising:
   i. water;
   ii. at least one surfactant;
   iii. at least one ethylenically unsaturated monomer;
   iv. optionally at least one plastic material;
   v. optionally at least one crosslinking functional or multi-ethylenically unsaturated monomer;
b. Polymerizing said first mixture in the presence of at least one polymerization initiator;
c. Forming a second mixture comprising:
   i. at least the product obtained in the step b;
   ii. at least water;
   iii. at least one surfactant;
   iv. at least one plastic material;
   v. at least one ethylenically unsaturated monomer;
   vi. optionally at least one crosslinking functional or multi-ethylenically unsaturated monomer;
d. Polymerizing said second mixture in the presence of at least one polymerization initiator to obtain a polymer emulsion;
e. Optionally transforming the resulting polymer emulsion into powder.

The present invention also relates to a multistage seeded emulsion polymerization process for producing a polymer, said process being made in the presence of at least one seed, and comprising the following successive steps:
a. Forming a first mixture comprising:
   i. water;
   ii. at least one ethylenically unsaturated monomer, preferably a carboxylic functional monomer;
   iii. at least on plastic material;
   iv. optionally at least one surfactant;
   v. optionally at least one crosslinking functional or multi-ethylenically unsaturated monomer;
b. Polymerizing said first mixture in the presence of at least one polymerization initiator, to produce a polymeric stabilizer;
c. Neutralizing the polymeric stabilizer with at least one neutralizing agent to a pH value in between the range from 7 to 11;
d. Forming a second mixture comprising:
   i. at least the neutralized polymeric stabilizer obtained in step c;
   ii. at least one ethylenically unsaturated monomer;
   iii. optionally at least one plastic material;
   iv. optionally at least one surfactant;
   v. optionally at least one crosslinking functional or multi-ethylenically unsaturated monomer;
e. Polymerizing said second mixture in the presence of at least one polymerization initiator to obtain a polymer composition;
f. Optionally transforming the resulting polymer composition into powder.

The present invention also relates to a multistage seeded emulsion polymerization process for producing a polymer, said process being made in the presence of at least one seed, and comprising the following successive steps:
a. Forming a first mixture comprising:
   i. water;
   ii. at least one carboxyl functional monomer;
   iii. optionally at least on plastic material;
   iv. optionally at least one surfactant;
   v. optionally at least one crosslinking functional or multi-ethylenically unsaturated monomer;
b. Polymerizing said first mixture in the presence of at least one polymerization initiator, to produce a polymeric stabilizer;
c. Neutralizing the polymeric stabilizer with at least one neutralizing agent to a pH value in between the range from 7 to 11;
d. Forming a second mixture comprising:
   i. at least the neutralized polymeric stabilizer obtained in step c;
   ii. at least one plastic material;
   iii. at least one ethylenically unsaturated monomer;
   iv. optionally at least one surfactant;
   v. optionally at least one crosslinking functional or multi-ethylenically unsaturated monomer;
e. Polymerizing said second mixture in the presence of at least one polymerization initiator to obtain a polymer composition;
f. Optionally transforming the resulting polymer composition into powder.

### The plastic material

According to the invention, the plastic material can be a virgin plastic material, or a waste plastic material. It is preferably a waste plastic material. According to the invention, a waste plastic material is a plastic material that has been used in at least one previous use or object and that is reused. Generally, the waste plastic is treated before its reuse. Waste plastic may be recycled plastic material or scrap plastic material.

The plastic material is preferably in solid form, preferably in the form of solid particles. The plastic material is preferably crushed, grinded or shred to decrease its particle size before being used in the process of the invention. It also renders easier the dissolution of the plastic material into the solvent.

The average particle size of the plastic material is used in the process of the invention is preferably comprised between 0.1 to 1000 µm, more preferably between 0.1 and 100 µm, even more preferably between 0.1 and 10 µm.

The plastic material may also refer to oligomers. Those oligomers can be degraded polymers such as Polyethylene terephtalate, Polylactic acid, Polycaprolactone, Polymethylmethacrylate, or intentionally produced low molecular weight polymers such as thickeners, viscosifying agents.

The chemical nature of the plastic material can be selected from PET (Polyethyleneterephtalate), ABS (acrylonitile-butadiene-styrene), PAN (polyacrylonitrile), PP (polypropylene), PE (polyethylene), PMMA (polymethylmethacrylate), VAE (vinyl acetate-ethylene), PS (polystyrene), EPS (expanded polystyrene), XPS (extruded polystyrene), GPPS (general purpose polystyrene), HIPS (high impact polystyrene) and/or mixtures thereof. The chemical nature of the plastic waste is preferably PS (polystyrene), ABS (acrylonitile-butadiene-styrene), and PMMA (polymethylmethacrylate) and/or mixtures thereof.

The plastic material may be a bioplastic material. A bioplastic material is a plastic material made partially or totally from biobased resources. When the plastic material is a bioplastic material, it has a biobased carbon content preferably between 10% by weight and 100% by weight relative to the total weight of carbon of said monomer. The biobased carbon content is measured according to ASTM D6866-22 Standard.

The plastic material is added in at least one step of the process of the invention previously described. It may be added in one or more steps of the process. It may be added in one or multiple pouring.

The plastic material may be added directly to the process in a solid state.

The plastic material may also be dissolved partially or totally into at least one solvent. This partial or total dissolution may be done separately from the process, or it could be a step of the process of the invention.

When the partial or total dissolution of the plastic material is made separately from the process, it can be done in the same location where the process is conducted, or in a separate and different location. This is for example the case where the plastic material is partially or totally dissolved into a solvent at the supplier's location.

In this case the plastic material is partially or totally dissolved, preferably totally dissolved, at the supplier's site and transported to the location where the polymer of the invention is made to be used in the process of the invention. This pre-dissolution step that could be conducted in another location is not considered as an essential step of the process of the invention but just as an alternative way to prepare the plastic material for the process of the invention.

In a preferred embodiment the plastic material is totally dissolved, and the resulting mixture is a solution of dissolved plastic material in the solvent. The plastic material is preferably totally dissolved before the polymerization.

It is also possible that the dissolution of the plastic material is partial before the polymerization.

When the plastic material is partially dissolved, the partial dissolution is such that at least 20% by weight of the total weight of plastic material is dissolved into a solvent, preferably at least 40% by weight, more preferably at least 60% by weight, even more preferably at least 80% by weight, even more preferably at least 90% by weight.

The dissolution of the plastic material into the solvent is made with any mean able to mix properly the plastic material and a solvent. The mixing may be realized at room temperature. The mixing may also be realized by warming the mixture at a temperature above the room temperature, preferably between 30°C and 60°C. It generally leads to a quicker dissolution.

According to the invention, one type of plastic material may be used, or a combination of two or more different types plastic materials. The types of plastic material means the chemical nature of said plastic material.

When the plastic material is pre-dissolved into the solvent in a separate step, the concentration of the plastic material is preferably comprised between 1% and 70% by weight, more preferably between 5% and 50% by weight, even more preferably between 10% and 35% by weight.

The concentration of plastic material based on the total weight of the final polymer emulsion is preferably comprised between 0,5% and 50% by weight, more preferably between 3% and 40% by weight, even more preferably between 5% and 30% by weight.

The solvent may be a non-reactive solvent or a reactive solvent. It is preferably a reactive solvent. It can be a mixture of at least one non-reactive solvent, and at least one reactive solvent.

A reactive solvent is a solvent that is able to dissolve partially or totally the plastic material, and which is able to polymerize with ethylenically unsaturated group. Reactive solvent is preferably an ethylenically unsaturated monomer, or a combination of ethylenically unsaturated monomers.

Ethylenically unsaturated monomers are preferably selected from the list comprising alkyl acrylates or alkyl methacrylates such as linear, branched or cycloaliphatic Ci-C22-alkyl(meth)acrylates, methyl(meth)acrylate, ethyl(meth)acrylate,n-butyl(meth)acrylate, isobutyl-(meth)acrylate, lauryl(meth)acrylate, 2-ethylhexyl(meth)acrylate, stearyl-(meth)acrylate, cyclohexyl(meth)acrylate, isobornyl(meth)acrylate, 2-octyl- (meth)acrylate and tert-butyl(meth)acrylate, aryl(meth)acrylates, benzyl(meth)acrylate and phenyl(meth)-acrylate, tetrahydrofurfuryl(meth)acrylate, methoxyethoxyethyl(meth)- acrylate, 1 - butoxypropyl(meth)acrylate,cyclohexyloxymethyl(meth)acrylate,methoxymethoxyethyl(meth )acrylate, benzyloxymethyl(meth)acrylate, furfuryl-(meth)acrylate, 2-butoxy ethyl (meth)acrylate, 2-ethoxyethyl(meth)acrylate, allyloxymethyl(meth)acrylate, 1 - ethoxybutyl(meth)acrylate, 1 -ethoxyethyl- (meth)acrylate,ethoxymethyl(meth)acrylate, poly(ethyleneglycol)methyl-ether(meth)acrylate, and poly(propyleneglycol) methylether (meth)acrylate or aminoalkyl(meth)acrylates such as N,N-dimethyl aminoethyl (meth)acrylate, 2- trimethylammoniumethyl(meth)acrylatchloride and N,N-dimethyl amino-propyl(meth)acrylate, oxiranyl(meth)acrylates such as 2,3-epoxy butyl(meth)acrylate, 3,4-epoxy- butyl(meth)acrylate and glycidyl(meth)acrylate, styrenes, substituted styrenes such as a-methylstyrenes, 4-methylstyrenes, 4-vinylbenzoic acid and sodium-4-vinylbenzene sulfonate, vinylesters of carboxylic acids comprising 1 to 20 carbon atoms, especially vinylacetate, vinylesters of versatic acids such as VeoVa-10, 10 (meth)acrylamides, acid functional monomers such as acrylic acid, methacrylic acid, itaconic acid, crotonic acid, fumaric acid, n-butylacrylic acid, iso- butylacrylic acid, laurylacrylic acid, 2-ethylhexylacrylic acid, stearylacrylic acid, cyclohexylacrylic acid, isobornylacrylic acid and tert-butylacrylic acid.

The preferred reactive solvent is preferably chosen from the list comprising styrene, ethyacrylate, 2-ethylhexylacrylate, butyl acrylate, methylmethacrylate, vinylacetate, acrylic acid, methacrylic acid or on of their salts, or a combination thereof.

A non-reactive solvent is a solvent that is able to dissolve partially or totally the plastic material, but which is not able to polymerize with ethylenically unsaturated monomer. Non-reactive solvent is preferably chosen from the list comprising toluene, benzene, xylenes, ethylbenzene, p-diethylbenzene, octane, dodecane, cyclohexane, methylcyclohexane, chloromethane, methylene chloride, chloroform, 1,1 dichloroethane, carbon tetrachloride, chlorobenzene tetrahydrofuran, 1,4 dioxane, dibenzylether, acetone, methylethylketone, cycloexanone, diethylketone, acetophenone, methylisobutylketone, isophorone, methylacetate, propylencarbonate, isopropyl alcohol, ethanol, propanol, butanol, benzyl alcohol, cyclohexanol, diethyleneglycolmonomethyl ether, monoethyleneglycolmonomethyl ether, diethyleneglycolmonoethyl ether, glycerol, propyleneglycol, ethylacetate.

When at least one non-reactive solvent is used, said non-reactive solvent is preferably eliminated during and/or after the emulsion polymerization.

In one embodiment, waste of EPS (expanded polystyrene) is used in the process of the invention and is partially, preferably totally dissolved in an ethylenically unsaturated monomer, preferably styrene, to bear a final mixture with concentration of 5 % (w/w) to 50% (w/w). Said mixture is preferably used for the synthesis of styrene-acrylic emulsion via seeded emulsion polymerization according to the invention.

In another embodiment, waste of PMMA (polymethylmethacrylate) is used in the process of the invention and is partially, preferably totally dissolved in an ethylenically unsaturated monomer, preferably methyl methacrylate, to bear a final mixture with concentration of 5 % (w/w) to 50% (w/w). Said mixture is preferably used for the synthesis of styrene-acrylic emulsion via seeded emulsion polymerization according to the invention.

In another embodiment, wastes of PMMA (polymethylmethacrylate) and PS grade (polystyrene) are used in the process of the invention and are partially, preferably totally dissolved in at least one ethylenically unsaturated monomer, preferably styrene and/or methyl methacrylate, to bear a final mixture with concentration of 5 % (w/w) to 50% (w/w). Said mixture is preferably used for the synthesis of styrene-acrylic emulsion via seeded emulsion polymerization according to the invention. PS grade can be EPS or XPS or GPPS or HIPS or combination of thereof.

In another embodiment, wastes of PMMA (polymethylmethacrylate) and EPS (expanded polystyrene) are used in the process of the invention and are partially, preferably totally dissolved in at least one ethylenically unsaturated monomer, preferably styrene and/or methyl methacrylate, to bear a final mixture with concentration of 5 % (w/w) to 50% (w/w). Said mixture is preferably used for the synthesis of styrene-acrylic emulsion via seeded emulsion polymerization according to the invention.

In another embodiment, wastes of PS grade (polystyrene) is used in the process of the invention and is partially, preferably totally dissolved in at least one ethylenically unsaturated monomer, preferably vinyl acetate, to bear a final mixture with concentration of 5 % (w/w) to 50% (w/w). Said mixture is preferably used for the synthesis of vinylic-acrylic emulsion or a full vinylic emulsion, via seeded emulsion polymerization according to the invention. PS grade can be EPS or XPS or GPPS or HIPS or combination of thereof.

In another embodiment, wastes of ABS (acrylonitile-butadiene-styrene) is used in the process of the invention and is partially, preferably totally dissolved in at least one ethylenically unsaturated monomer, preferably ethyl acrylate, butyl acrylate, styrene, methyl methacrylate or acrylic acid, vinyl acetate or a mixture thereof, to bear a final mixture with concentration of 5 % (w/w) to 50% (w/w). Said mixture is preferably used for the synthesis of styrene-acrylic emulsion, or vinyl-acrylic emulsion via seeded emulsion polymerization according to the invention.

In another embodiment, wastes of PS grade (polystyrene), PMMA or ABS (acrylonitile-butadiene-styrene) are used in the process of the invention and are partially, preferably totally dissolved in at least one ethylenically unsaturated monomer, preferably vinyl acetate, styrene, acrylic acid, methacrylic acid, butyl acrylate, 2-ethylhexyl acrylate or methyl methacrylate, or a mixture thereof, to bear a final mixture with concentration of 5 % (w/w) to 50% (w/w). Said mixture is preferably used for the synthesis of vinylic-acrylic emulsions, styrene-acrylic emulsions or vinyl-VeoVa emulsions or vinyl-acrylic-VeoVa emulsions or a full vinylic emulsion, via seeded emulsion polymerization according to the invention. PS grade can be EPS or XPS or GPPS or HIPS or combination of thereof.

### The ingredients used in the process of the invention

When at least one surfactant is used for stabilization of the particles. Suitable surfactant can be all commercially available ionic and non-ionic surfactant. Particularly, preferred examples are fatty alcohol ether sulphates, ethoxylated alcohol polyethylene glycol ethers, ethoxylated fatty alcohols and also alkali metal and ammonium salts of long-chain alkyl sulfates (C8-C12-alkyl radical), of sulfuric monoesters of ethoxylated alkanols and ethoxylated alkylphenols of alkyl acids and of alkylaryl sulfonic acids.

When at least one stabilizer is used the stabilizer is preferably polyvinyl alcohols, hydroxyethyl cellulose, polyethylene glycol, polyvinylpyrrolidone, carboxymethylcellulose, starch and cellulose derivatives. The stabilizer is colloidal stabilizer. It may be a polymeric stabilizer.

The term "polymeric stabilizer (PS)" as used herein and throughout the specification refers to a type of stabilizer which have generally both hydrophobic moieties and carboxylic acid functional groups. They are macromolecules used in conventional emulsion polymerization and widely used for producing water-based latexes with improved colloidal properties.

The polymeric stabilizer has preferably a weight average molecular weight within the range of 1.000 to 120.000 Daltons, preferably within the range of 5.000 to 60.000, more preferably within the range of 10.000 to 50.000, even more preferably within the range of 10.000 to 30.000 Daltons.

At least one ethylenically unsaturated monomer is used in the process of the invention. Suitable ethylenically unsaturated monomer is preferably selected from the list previously described. One or more ethylenically unsaturated monomer may be used.

Optionally, at least one crosslinker may be used in the process of the invention. Said crosslinkers are preferably chosen from the list comprising N-methylol acrylamide, N-methylolmethacrylamide, N-(alkoxymethyl)acrylamides or N-(alkoxymethyl)methacrylamides containing a C1-C6-alkyl radical, e.g. N-isobuthoxymethyl)acrylamide (IBMA), N-(isobutoxymethyl)methacrylamide (IBMMA), N-(n-butoxymethyl)acrylamide (NBMA), N-(n-butoxymethyl)methacrylamide (NBMMA), diacetone acrylamide (DIAAM); multiple ethylenically unsaturated comonomers such as ethylene glycol diacrylate, 1,3- butylene glycol di(meth)acrylate, 1,4-butylene glycol di(meth)acrylate, propylene glycol diacrylate, divinyl adipate, divinyl benzene, vinyl methacrylate, vinyl acrylate, allyl (meth)acrylate, diallyl maleate, diallyl phthalate, diallyl fumarate, methylenebisacrylamide, cyclopentadienyl acrylate or triallyl cyanurate.

The polymerization is optionally made in the presence of a chain transfer agent.

Suitable chain-transfer agents could be isopropanol, mercaptoethanol, 3-mercaptopropanol, 3-mercaptopropionic acid, 1-butanethiol, 1-propanethiol, 1-prentanethiol, 2-methyl-2-propaneethiol, 1-hexanethiol, 1-octanethiol, tert-nonyl mercaptane, n-dodecyl mercaptane, tert-dodecyl mercaptane, 3-mercapto-3-methyl butanol, 1-mercapto-2-phenyl-2-ethanol, thioglycolic acid, methyl thioglycolate, n-butyl thioglycolate, 2-ethylhexyl thioglycolate, i-octyl thioglycolate, dodecyl thioglycolate, octadecyl thioglycolate, methyl-3-mercaptopropionate, butyl-3-mercaptopropionate, isooctyl-3-mercaptopropionate, isodecyl-3-mercaptopropionate, dodecyl-3-mercaptopropionate, octadecyl-3-mercaptopropionate, , 4-methylbenzene thiol, benzenethiol, 4,4'-thiobisbenzenethiol, azelaic alkyl mercaptane, tetrabromomethane and carbon tetrachloride.

### Seed polymer

The term "seed polymer" as used herein refers to finely divided polymer particles. They are generally present in an aqueous dispersion. The seed polymer can be prepared by emulsion polymerization method. The seed polymer is used in the initiation step of the polymerization, and act as a starting point for the polymerization.

The seed polymer is made by polymerization of at least one ethylenically unsaturated monomer unit chosen from the list previously described.

The average particle size of the seed polymer particles is between 5 to 500 nm, preferably between 10 nm and 200 nm, more preferably between 30 nm and 150 nm.

The average particle size is determined by using laser diffraction, particularly by using the device Zetasizer PRO ZSU 3200 model.

The amount of the seed polymer based on the total amount of the ethylenically unsaturated monomers used to produce the polymer of the invention. is preferably comprised between 0.01 to 10% by weight,

### Polymerization

The polymerization reaction is preferably carried out in a temperature range of from 25°C to 100°C.

The polymerization reaction is preferably initiated by means of water-soluble free-radical initiators. Preferably the polymerization initiators, may be selected from the group consisting of thermal polymerization initiators, redox polymerization initiators and combinations thereof, particularly inorganic and/or organic persulfates such as ammonium, potassium persulfate, sodium persulfates and the like, peroxides such as cumene hydroperoxide, tert-butyl hydroperoxide, benzoyl peroxide, hydrogen peroxide, and the like and also perbenzoates, per-alkanoates or azoinitiators such as azobis- isobutyronitrile (AIBN) and combinations thereof for the production of sustainable binder composition.

Suitable reducing agents of a redox initiator system may include compounds, such as sulphur compounds, such as alkali metal bisulfites, hydrogen sulfites, ketone adducts of bisulfites, such as acetone bisulfite, alkali metal disulfites, metabisulfites and its salts, formaldehyde sulfoxylates and its salts, thiosulfates, reducing nitrogen compounds, such as hydroxylamine hydrosulfate , hydroxylamines and hydroxylammonium salts, polyamines and reducing sugars, such as sorbose, fructose, glucose, lactose and derivatives thereof, enediols, such as and isoascorbic acid, ascorbic acid sulfinic acids, hydroxy alkyl sulfinic acids, such as hydroxy methyl sulfinic acid and 2-hydroxy-2-sulfinactic acid and its salts. In addition, it is possible to use metal compounds in which the metal can be present in various oxidation states, e.g. iron (II) sulfate.

The polymer emulsion obtained after the seeded emulsion polymerization according to the invention has a polymer content generally comprised between 20 and 70% by weight. The average particle size of the polymer in the polymer emulsion is generally comprised between 25 nm and 4000 nm. The pH of the polymer emulsion is generally adjusted between 2,5 and 13.

### Optional step in which the polymer emulsion is transformed into a powder.

The process of the invention may also comprise an additional step in which the polymer emulsion (or latex) is dried to obtain a polymer powder. The polymer powder is preferably redispersible in water.

For the preparation of the polymer powder, the polymer emulsion is dried, for example by means of fluidized-bed drying, freeze-drying or spray-drying, preferably spray-drying. In general, the spray-drying is carried out in conventional spray-drying plants by hot air steam known from the prior art. It is possible to effect the atomization by means of airless nozzles, binary nozzles or multiple nozzles or with a rotating disk. The inlet temperature of the spray dryer is usually from 80 to 150°C, preferably from 120 to 145°C. The outlet temperature of the spray dryer is usually from 40 to 100°C, preferably from 50 to 80°C.

To avoid caking of the polymer powder, anticaking agents such as finely divided silica, kaolin, calcium carbonate, magnesium carbonate, talc, aluminium silicates, combinations of dolomite or other mineral auxiliaries can be used in a known manner.

### The usage of the polymer of the invention in various applications

The present invention relates to the use the polymer of the invention to produce coating, paint, primer, ink, adhesives such as pressure sensitive adhesive, textile and leather additive, paper additive, constructions additive.

The polymer of the invention may be advantageously used in coating formulations such as interior or exterior paints, primers, plasters, trowel applied decorative coatings for architectural applications, also for industrial wood and metal coatings, coatings for plastic & composite surfaces, road marking paints, roof coatings, roof tile paints, printings inks, agricultural coatings, dust and sol stabilization coatings, and overprint varnishes, pressure sensitive adhesives such as paper label adhesive, packaging tape adhesive, protective film adhesive, lamination adhesive, contact adhesive, paper tape adhesive, masking tape adhesive, film label adhesive, cold seal-heatseal adhesive, flooring, adhesive, flexible packaging adhesive, tapes, protective films, packaging lamination, specialty paper, paper coating, paper impregnation binder, release binder, paper saturation binder etc., textile and leather applications such as finishing, coating, flocking, nonwoven, printing, wet end, finishing and construction applications such as construction adhesives and coatings as waterproofing and sealing, cement modifiers, sealants, tile adhesives and grouts, mortar and repair mortar, external thermal insulation composite system, self-leveling compounds and redispersible powders.

### The Binder

The present invention also relates to a binder composition comprising at least one polymer of the invention or at least a polymer obtained according to the process of the invention.

The binder composition may also comprise other ingredients known by the skilled man of the art, for example at least one coalescing agent.

The coalescing agent is preferably chosen from the list of texanol, propylene glycol, dipropylene glycol, polyethylene glycol, butyl carbitol acetate, mixture of mono and bi-carboxylic esters, n-butyl ether, butyl diglycol, tripropylene glycol n-butyl ether, Eastman Optifilm^{™} enhancer 400, Coasol^{®} 290 Plus, DPNB (Dipropylene Glycol n-Butyl Ether , DPM (Di(propylene glycol) methyl ether, mixture of isomers) and etc.

The binder composition comprises preferably from 0 to 5% by weight of at least one coalescing agent.

### The usage of said binder composition in various applications

The present invention relates to the use of the binder composition according to the invention to produce coating, paint, primer, ink, varnish, textile and leather additive, construction additive, paper coating, paper impregnation, and pressure sensitive adhesive.

The present invention also relates to a coating, paint, primer, ink, varnish, textile additive, construction additive, paper coating, paper impregnation, and pressure sensitive adhesive made with at least one binder composition according to the invention.

The binder composition of the invention may be advantageously used in coating formulations such as interior or exterior paints, primers, plasters, trowel applied decorative coatings for architectural applications, also for industrial wood and metal coatings, coatings for plastic & composite surfaces, road marking paints, roof coatings, roof tile paints, printings inks, seed coatings, dust and soil coatings, and overprint varnishes, pressure sensitive adhesives such as paper label adhesive, packaging tape adhesive, protective film adhesive, lamination adhesive, contact adhesive, paper tape adhesive, masking tape adhesive, film label adhesive, cold seal-heatseal adhesive, flooring, adhesive, flexible packaging adhesive, tapes, protective films, packaging lamination, specialty paper, paper coating, paper impregnation binder, release binder, paper saturation binder etc., textile and leather applications such as finishing, coating, flocking, nonwoven, printing, wet end, finishing and construction applications such as waterproofing and sealing, cement modifiers, sealants, tile adhesives and grouts, mortar and repair mortar, external thermal insulation composite system, self-leveling compounds and redispersible powders.

The process of the invention offers a tremendous opportunity to valorize plastic wastes at an industrial scale to produce high performances polymers.

The invention is described in more detail, but not limited to the following examples. The parts and percentages stated in the examples are based on weight unless otherwise stated.

### Examples

### 1) Preparation of polymer emulsions

### Ingredients

The chemicals used in the synthesis refers to:
Surfactant A (solids: 28%), available from Solvay, is sodium C12-14 lauryl sulphate.
Surfactant B (solids: 100%), available from Sasol, is a fatty alcohol polyethyleneglycol ether, based on MARLIPAL 13 and ethylene oxide (about 12 moles).
Sodium persulphate (>99% w/w, purity), available from ECEM.
Tert-butylhydroperoxide (70% w/w, aqueous solution), available from Univar.
Sodium metabisulphite (99% w/w, purity), available from Brenntag.
Acrylamide (30% w/w, aqueous solution), available from SNF.
Styrene (99.7% w/w, purity), available from Tricon Energy.
Acrylic acid (>99.5% w/w, purity), available from BASF.
Butyl acrylate (>99.5% w/w, purity), available from BASF.
Ammonium hydroxide (25% w/w, aqueous solution), available from Brenntag.

### Polymer emulsions

Three polymer emulsions (Examples 1 to 3) are prepared according to the process of the invention, and four polymer emulsions (Examples 4 to 7) are prepared according to a process different from the process of the invention. Table 1 refers to the seven polymer emulsions.

**Table 1 - Process and use of plastic material**

| Example | Process | Emulsion polymerization Type | Waste plastic used |
|---|---|---|---|
| Example 1 | Inventive Trial 1 | Seeded | Yes |
| Example 2 | Inventive Trial 2 | Seeded | Yes |
| Example 3 | Inventive Trial 3 | Seeded | Yes |
| Example 4 | Comparative Trial 1 | Not seeded | No |
| Example 5 | Comparative Trial 2 | Seeded | No |
| Example 6 | Comparative Trial 3 | Seeded | No |
| Example 7 | Comparative Trial 4 | Not seeded | Yes |

### Example 1: Inventive trial 1: styrene/acrylic polymer obtained with seeded emulsion polymerization that contains 15.8% waste plastic

To a 3-necked flask equipped with stirrer, thermometer, and a reflux condenser, 214.3 parts of deionized water was added, and flask was heated to 85 °C. 1.6 parts of sodium persulphate dissolved in 7.58 parts of deionized water was added into the flask. Afterwards, 6.95 parts of seed polymer that has a particle size of 50 nm was added to the flask. Upon the addition of seed polymer, temperature decreased to 78°C. The emulsion, consisting of 66.25 parts of deionized water, 72.69 parts of waste plastic powder, 154.48 parts of styrene, 36.33 parts of Surfactant A, 31.93 parts of Surfactant B, 1.5 parts of acrylic acid, and 232.86 parts of butyl acrylate, was added into the flask within 120 minutes at 78 °C. The initiator solution consisting of 2.5 parts of sodium persulphate dissolved in 58.3 parts of deionized water was fed parallel to the emulsion feed. At the end of feeding, the temperature was risen to 90 °C and the reaction mixture was kept at this temperature for 30 minutes. First neutralization was performed at 90 °C by adding 2.76 parts of 25% ammonium hydroxide solution and pH was adjusted to between 5.0-6.0. Subsequently, the flask was cooled down to 70 °C and 1.06 parts of tert-butylhydroperoxide dissolved in 10 parts of deionized water was added into the flask in 10 minutes. After 15 minutes of waiting time, 0.5 parts of sodium metabisulphite dissolved in 11.72 parts of deionized water was added into the flask in 10 minutes. After these steps, the flask was cooled down to 40 °C and 7.91 parts of 25% ammonium hydroxide solution was added at the same temperature in order to adjust the flask pH between 7.5-9.0. At 30 °C biocides were added. At the end of the reaction, 104.9 parts of deonized water was added.
(Solid content: 50%, Viscosity (LVT 3/60): 896 cps, pH: 8.02.

### Example 2: Inventive trial 2: styrene/acrylic trial obtained with seeded emulsion polymerization that contains 15.8% waste plastic

To a 3-necked flask equipped with stirrer, thermometer, and a reflux condenser, 214.3 parts of deionized water was added, and flask was heated to 85 °C. 1.6 parts of sodium persulphate dissolved in 7.58 parts of deionized water was added into the flask. Afterwards, 6.95 parts of seed polymer that has a particle size of 50 nm was added to the flask. Upon the addition of seed polymer, temperature decreased to 78 °C. The emulsion, consisting of 77.1 parts of deionized water, 154.48 parts of styrene, 72.69 parts of waste plastic powder, 25.03 parts of Surfactant A, 31.93 parts of Surfactant B, 1.5 parts of acrylic acid, and 232.86 parts of butyl acrylate, was added into the flask within 120 minutes at 78 °C. The initiator solution consisting of 2.5 parts of sodium persulphate dissolved in 58.3 parts of deionized water was fed parallel to the emulsion feed. At the end of feeding, the temperature was risen to 90 °C and the reaction mixture was kept at this temperature for 30 minutes. First neutralization was performed at 90 °C by adding 2.76 parts of 25% ammonium hydroxide solution and pH was adjusted to between 5.0-6.0. Subsequently, the flask was cooled down to 70 °C and 1.06 parts of tert-butylhydroperoxide dissolved in 10 parts of deionized water was added into the flask in 10 minutes. After 15 minutes of waiting time, 0.5 parts of sodium metabisulphite dissolved in 11.72 parts of deionized water was added into the flask in 10 minutes. After these steps, the flask was cooled down to 40 °C and 7.91 parts of 25% ammonium hydroxide solution was added at the same temperature in order to adjust the flask pH between 7.5-9.0. At 30 °C biocides were added. At the end of the reaction, 99 parts of deonized water was added.
(Solid content: 50%, Viscosity (LVT 3/60): 462 cps, pH: 8.25.

### Example 3: Inventive trial 3: styrene/acrylic polymer obtained with seeded emulsion polymerization that contains 15.8% waste plastic

To a 3-necked flask equipped with stirrer, thermometer, and a reflux condenser, 214.3 parts of deionized water was added, and flask was heated to 85 °C. 1.6 parts of sodium persulphate dissolved in 7.58 parts of deionized water was added into the flask. Afterwards, 6.95 parts of seed polymer that has a particle size of 50 nm was added to the flask. Upon the addition of seed polymer, temperature decreased to 78 °C. The emulsion, consisting of 66.25 parts of deionized water, 72.69 parts of waste plastic powder, 190.98 parts of styrene, 36.33 parts of Surfactant A, 31.93 parts of Surfactant B, 1.5 parts of acrylic acid, and 196.36 parts of butyl acrylate, was added into the flask within 120 minutes at 78 °C. The initiator solution consisting of 2.5 parts of sodium persulphate dissolved in 58.3 parts of deionized water was fed parallel to the emulsion feed. At the end of feeding, the temperature was risen to 90 °C and the reaction mixture was kept at this temperature for 30 minutes. First neutralization was performed at 90 °C by adding 2.76 parts of 25% ammonium hydroxide solution and pH was adjusted to between 5.0-6.0. Subsequently, the flask was cooled down to 70 °C and 1.06 parts of tert-butylhydroperoxide dissolved in 10 parts of deionized water was added into the flask in 10 minutes. After 15 minutes of waiting time, 0.5 parts of sodium metabisulphite dissolved in 11.72 parts of deionized water was added into the flask in 10 minutes. After these steps, the flask was cooled down to 40 °C and 6.66 parts of 25% ammonium hydroxide solution was added at the same temperature in order to adjust the flask pH between 7.5-9.0. At 30 °C biocides were added. At the end of the reaction, 105.5 parts of deonized water was added.
(Solid content: 50%, Viscosity (RVT 5/20): 1040 cps, pH: 8.0.

### Example 4: Comparative trial 1: Styrene acrylic polymer trial which does not contain waste plastic and not made by seeded emulsion polymerization

To a 3-necked flask equipped with stirrer, thermometer, and a reflux condenser, 214.3 parts of deionized water, 2 parts of Surfactant A and 4 parts of Surfactant B were added respectively. Thereupon the flask was heated to 85 °C. 1.3 parts of sodium persulphate dissolved in 7.58 parts of deionized water was added into the flask. Afterwards, 32.6 parts of pre-emulsion was taken from the emulsion, consisting of 77.1 parts of deionized water, 22.1 parts of Surfactant A , 30 parts of Surfactant B , 227.17 parts of styrene, 1.5 parts of acrylic acid, and 232.86 parts of butyl acrylate, and later was added into the flask. Remaining part of the emulsion and 2.5 parts of sodium persulphate dissolved in 58.3 parts of deionized water were fed at 78 °C in 2 hr. At the end of feeding, the temperature was risen to 90 °C and the reaction mixture was kept at this temperature for 5 minutes. First neutralization was performed at 90 °C by adding 2.76 parts of 25% ammonium hydroxide solution and pH was adjusted to between 5.0-6.0. Subsequently, the flask was cooled down to 65 °C and 1.06 parts of tert-butylhydroperoxide dissolved in 10 parts of deionized water was added into the flask in 10 minutes. After 15 minutes of waiting time, 0.5 parts of sodium metabisulphite dissolved in 11.72 parts of deionized water was added into the flask in 10 minutes. After these steps, the flask was cooled down to 40 °C and 2.41 parts of 25% ammonium hydroxide solution was added at the same temperature in order to adjust the flask pH between 7.5-9.0. At 30 °C biocides were added. At the end of the reaction, 106.25 parts of deonized water was added.
(Solid content: 50%, Viscosity (RVT 5/20): 2500 cps, pH: 9.

### Example 5: Comparative trial 2: Styrene acrylic polymer generated with seeded emulsion polymerization and without waste plastic

To a 3-necked flask equipped with stirrer, thermometer, and a reflux condenser, 214.3 parts of deionized water was added, and flask was heated to 85 °C. 1.6 parts of sodium persulphate dissolved in 7.58 parts of deionized water was added into the flask. Afterwards, 6.95 parts of seed polymer that has a particle size of 50 nm was added to the flask. Upon the addition of seed polymer, temperature decreased to 78 °C. The emulsion, consisting of 66.25 parts of deionized water, 36.33 parts of Surfactant A, 31.93 parts of Surfactant B, 227.17 parts of styrene, 1.5 parts of acrylic acid, and 232.86 parts of butyl acrylate, was added into the flask within 120 minutes at 78 °C. The initiator solution consisting of 2.5 parts of sodium persulphate dissolved in 58.3 parts of deionized water was fed parallel to the emulsion feed. At the end of feeding, the temperature was risen to 90 °C and the reaction mixture was kept at this temperature for 30 minutes. First neutralization was performed at 90 °C by adding 2.76 parts of 25% ammonium hydroxide solution and pH was adjusted to between 5.0-6.0. Subsequently, the flask was cooled down to 70 °C and 1.06 parts of tert-butylhydroperoxide dissolved in 10 parts of deionized water was added into the flask in 10 minutes. After 15 minutes of waiting time, 0.5 parts of sodium metabisulphite dissolved in 11.72 parts of deionized water was added into the flask in 10 minutes. After these steps, the flask was cooled down to 40 °C and 7.41 parts of 25% ammonium hydroxide solution was added at the same temperature in order to adjust the flask pH between 7.5-9.0. At 30 °C biocides were added. At the end of the reaction, 105.2 parts of deonized water was added.
(Solid content: 50%, Viscosity (RVT 5/20): 440 cps, pH: 8.53.

### Example 6: Comparative trial 3: Styrene acrylic polymer obtained with seeded emulsion polymerization and without waste plastic

To a 3-necked flask equipped with stirrer, thermometer, and a reflux condenser, 214.3 parts of deionized water was added, and flask was heated to 85 °C. 1.6 parts of sodium persulphate dissolved in 7.58 parts of deionized water was added into the flask. Afterwards, 6.95 parts of seed polymer that has a particle size of 50 nm was added to the flask. Upon the addition of seed polymer, temperature decreased to 78 °C. The emulsion, consisting of 66.25 parts of deionized water, 36.33 parts of Surfactant A, 31.93 parts of Surfactant B, 192.17 parts of styrene, 1.5 parts of acrylic acid, and 267.86 parts of butyl acrylate, was added into the flask within 120 minutes at 78 °C. The initiator solution consisting of 2.5 parts of sodium persulphate dissolved in 58.3 parts of deionized water was fed parallel to the emulsion feed. At the end of feeding, the temperature was risen to 90 °C and the reaction mixture was kept at this temperature for 30 minutes. First neutralization was performed at 90 °C by adding 2.76 parts of 25% ammonium hydroxide solution and pH was adjusted to between 5.0-6.0. Subsequently, the flask was cooled down to 70 °C and 1.06 parts of tert-butylhydroperoxide dissolved in 10 parts of deionized water was added into the flask in 10 minutes. After 15 minutes of waiting time, 0.5 parts of sodium metabisulphite dissolved in 11.72 parts of deionized water was added into the flask in 10 minutes. After these steps, the flask was cooled down to 40 °C and 7.41 parts of 25% ammonium hydroxide solution was added at the same temperature in order to adjust the flask pH between 7.5-9.0. At 30 °C biocides were added. At the end of the reaction, 105.2 parts of deonized water was added.
(Solid content: 50%, Viscosity (RVT 5/20): 380 cps, pH: 7.71.

### Example 7: Comparative trial 4: Contains plastic waste and ethylenically unsaturated monomer mixture, and not made by seeded emulsion polymerization

Example 7 was prepared following the procedure described in Example 4, except that 227.17 parts of styrene was replaced with 227.17 parts of waste plastic dissolved styrene solution in emulsion. However, a problem took place 30 minutes after the emulsion feed started avoiding good result. The reaction was terminated due to safety reasons.

### 2) Application Tests

The emulsions obtained have been tested as coating with the following application tests.

### Blocking resistance

Blocking resistance of the coating films were measured for decorative applications according to the Internal Method as explained hereinbelow: 200 µm wet film tickeness applied on PVC sheets, dried for 30 minutes at 40°C; then two pieces closed face-to-face and blocked under 2 kg for 24 hours at 23°C. After that, test pieces were separated from each other, and the blocking resistance was evaluated as mentioned in ASTM-D 4946 based on numerical rating code from 1 to 10. (10: best; 1: worst).

Block resistance is a measure of a coating's ability to resist destructive self-adhesion when placed into contact with itself. This is an important feature for coatings, especially for industrial paints rather than decorative ones because in these applications, components are generally dried in ovens and stacked. During this stacking, the painted surfaces are placed in contact, and they apply a certain pressure to each other. Due to this pressure, the materials either stick together or are easily separated without sticking, depending on the blocking resistance of the surface. Therefore, as an example, this feature is very important in furniture varnishes. The material with good blocking resistance can be separated without any damage to the varnish when varnish applied woods are put on each other after the varnish dries.

### Stain resistance

A test paint was applied on Leneta P-121-10N black vinyl charts with wet film thickness of 200 micron. The coating films were allowed to dry for 7 days at 23°C, 50% relative humidity. Different stains were then applied on cured film for different time periods (5 min and 1 h). After a specified contact time, the film was cleaned with a piece of napkin. Subsequently, the film was washed with 3M commercial sponge saturated with liquid soap. After washing, the residual soap solution was gently rinsed off and the panels were allowed to dry. ΔE color differences between the staining of the coating and the reference unstained surface were measured with X-Rite Ci60 spectrophotometer in accordance with ASTM D 2244. By definition, smaller ΔE values indicate better stain resistance, since they indicate that the stained and the reference surfaces are more alike in terms of color.
Stain tests are the following: Tea (5 min), coffee (5 min)

### Scuff resistance of paint films

200-micron drawdown films were prepared on PVC Leneta chart and dried 7 days at room temperature. After 7 days, scuff resistances of paint films were tested by scrubbing with different articles such as rubber, PVC, denim, leather. Scuff resistances were rated from zero to five where five means no visible change on the surface and zero means strong marking on the surface.

### Adhesion on Fiber Cement - Cross-cut dry adhesion test

The level of dry adhesion to specific test panels was determined using a cross-cut test in accordance with DIN EN ISO 2409. A test paint was applied on specific test panels. Wet film thickness was 100 microns for non-porous substrates and 200 micron for porous substrates. The coated panels were allowed to dry for 7 days at 23°C, 50% relative humidity. A cross-cut was made onto the dried coated panels using a cross-cut knife (Byk-5122). A self-adhesive tape (TESA 4204) was applied under uniform pressure onto the coated substrate, covering the cross-cut, where after the tape was pulled off in a single movement. The degree of dry adhesion of the coating onto the particular substrate was then classified with a scale from 0 to 5 (according ISO Class 0-5) by determining the amount of coating that is detached or flaked partly or wholly along the edges of the cuts, where 0 means that the cross-cut area is not affected (excellent adhesion); 1 means that the affected cross-cut area is not significantly greater than 5%; 2 means that the affected cross-cut area is significantly greater than 5%, but not significantly greater than 15%; 3 means that the affected cross-cut area is significantly greater than 15%, but not significantly greater than 35%; 4 means that the affected cross-cut area is significantly greater than 35%, but not significantly greater than 65%; 5 means any degree of flaking that cannot even be classified by classification 4 (very poor adhesion).

### Adhesion on Fiber Cement - Cross-cut wet adhesion test

To determine the level of wet adhesion to test panel, a cross-cut was made onto the dried coated panels using a cross-cut knife (Byk-5122). A napkin was placed onto coated and cross-cut substrate. Subsequently, the napkin was saturated with water and contacted with the substrate for 30 min. After a specified contact time, wet napkin was removed and the panel was allowed to dry. A self-adhesive tape (TESA 4204) was applied under uniform pressure onto the coated substrate, covering the cross-cut, where after the tape was pulled off in a single movement. The level of wet adhesion was then determined according the cross-cut test method used for determining the dry adhesion.

### Dry Opacity

The test was done according to BS EN ISO 6504-3. The paints were applied to black-white opacity card to achieve a wet film thickness of 200 microns. The film width should be at least 70mm. The paint films should be cured for a minimum of 16 hours at (23±2)°C temperature and (50±5)% relative humidity under ambient conditions. After 7 days of curing, the opacity was measured using a spectrophotometer. The results were reported in percentage values.

The test results are summarized in table 2 below.

| | Ex1-Inv1 | Ex2-Inv2 | Ex3-Inv3 | Ex4-Comp1 | Ex5-Comp2 | Ex6-Comp3 |
|---|---|---|---|---|---|---|
| Blocking Resistance (10:good; 0:poor) | 6 | 6 | 7 | 2 | 2 | 2 |
| Scuff Resistance (5:good;0:poor) | 5 | 4 | 4 | 2 | 3 | 3 |
| Stain resistance Tea 5min (lower:better) | 5 | 5 | 5 | 6 | 6 | 7 |
| Stain resistance Coffee 5 min (lower:better) | 5 | 5 | 5 | 6 | 6 | 6 |
| Adhesion on Fiber 7days Dry/Wet test (0: good; 5: poor) | 0/0 | 0/0 | 0/0 | 0/1 | 1/0 | 1/1 |
| Dry Opacity (%) | 96% to 97.5% | 96% to 97.5% | 96% to 97.5% | 96% to 97.5% | 96% to 97.5% | 96% to 97.5% |

The polymer emulsions made according to the process of the invention give a great improvement of the blocking resistance and the scuff resistance of coatings compared to the polymer emulsions that are not made according to the process of the invention.

The polymer emulsions made according to the process of the invention give an improvement of the stain resistance and the adhesion on fiber of coatings compared to the polymer emulsions that are not made according to the process of the invention.

The polymer emulsions made according to the process of the invention give similar dry opacity.

These results demonstrate that, the combination of the use of waste plastic with the specific choice of a seeded emulsion polymerization, leads to polymers having better technical performances.

The process of the invention offers a tremendous opportunity to valorize plastic wastes at an industrial scale to produce high performances polymers.

### Additional test results - Matting Test

The Emulsions obtained have been applied as a wet film with a thickness of 100 microns on opacity card and Lenetta card. The films were cured under climatic conditions for 16 hours. Three readings were taken to measure the gloss values of the cured films according to EN ISO 2813.

The results are descibed in Table 3 below.

| | Comp Trial 1 | Inv Trial 1 | Inv Trial 2 | Inv Trial 3 | Comp Trial 2 | Comp Trial 3 |
|---|---|---|---|---|---|---|
| | Clear Coating | | | | | |
| Gloss (20°/60°/85°) on opacity card | 89.3 / 97.1 / 101 | 23.6 / 62 / 92.5 | 27.8 / 65.1 / 92.3 | 30.5 / 66.8 / 95.8 | 92.8/97.2 / 101 | 89.9/95.6 / 100 |
| Gloss (60°) on opacity card | 97,1 | 62,0 | 65,1 | 66,8 | 97,2 | 95,6 |

| | Pigmented Coating (clear coating with 20% TiO2 pigment paste) | | | | | |
|---|---|---|---|---|---|---|
| Gloss (20°/60°/85°) on Lenetta card | 41,9 / 85,2 / 92,7 | 16,2 / 55,1 / 87,3 | 18,6 / 60 / 88,5 | 20,4 / 63,2 / 89,9 | 75,3 / 89,4 / 92, 8 | 31,2/85,2 / 92,1 |

**Table 3: results of Matting tests**

| | | | | | | |
|---|---|---|---|---|---|---|
| Gloss (60°) on Lenetta card | 85,2 | 55,1 | 60,0 | 63,2 | 89,4 | 85,2 |

The lower is the value, the more matt appearance is easier achieved. According to the results, inventive trials exhibited better matting properties when compared to the comparative trials.

Again, these results demonstrate that, the combination of the use of waste plastic with the specific choice of a seeded emulsion polymerization, leads to polymers having better technical performances.

The process of the invention offers a tremendous opportunity to valorize plastic wastes at an industrial scale to produce high performances polymers.

## Claims

1. Polymer obtained by seeded emulsion polymerization with at least one ethylenically unsaturated monomer, at least one seed polymer and at least one plastic material.

2. Polymer according to claim 1, wherein said polymer is in the form of an emulsion, a latex, or in powder form.

3. Polymer according to any of the previous claims, wherein the polymer is a styrene polymer, an acrylic polymer, a vinylic polymer, a styrene-acrylic polymer, a vinylic-acrylic polymer, a styrene-vinylic polymer, a styrene-acrylic-vinylic polymer, a fully vinylic polymer, a fully styrene polymer, or a fully acrylic polymer.

4. A process for producing a polymer by seeded emulsion polymerization comprising the polymerization of at least one ethylenically unsaturated monomer in the presence of at least one seed polymer and at least one plastic material.

5. A process according to claim 4, wherein the process comprises the following steps:
a) Preparing a mixture comprising at least one ethylenically unsaturated monomer, at least one seed polymer, and at least one plastic material;
b) Polymerizing the resulting mixture to obtain a polymer emulsion;
c) Optionally transforming the resulting polymer emulsion into powder.

6. A process according to claim 5, wherein the plastic material is added directly to the mixture, or pre-dissolved partially or totally into at least one solvent before being added into said mixture.

7. A process according to claim 6, wherein the solvent is an ethylenically unsaturated monomer, or a combination of ethylenically unsaturated monomers.

8. A process according to claims 4 to 7, wherein the process of the invention comprises the following steps:
a) Preparing a pre-emulsion with at least one ethylenically unsaturated monomer, at least one plastic material, at least one surfactant, and water;
b) Mixing at least one seed polymer with the pre-emulsion obtained in step a);
c) Polymerizing the resulting mixture obtained in step b) in the presence of at least one free-radical initiator to obtain a polymer emulsion.
d) Optionally transforming the resulting polymer emulsion into powder.

9. A process according to claims 4 to 7, wherein the process of the invention preferably comprises the following steps:
a) Preparing a pre-mix with at least one ethylenically unsaturated monomer, and at least one plastic material, and optionally water;
b) Mixing at least one seed polymer with the pre-mix obtained in step a);
c) Polymerizing the resulting mixture obtained in step b) in the presence of at least one free-radical initiator, water, and at least one stabilizer to obtain a polymer emulsion.
d) Optionally transforming the resulting polymer emulsion into powder.

10. A process according to claims 4 to 9, wherein the plastic material is selected from PET (Polyethyleneterephtalate), ABS (acrylonitile-butadiene-styrene), PAN (polyacrylonitrile), PP (polypropylene), PE (polyethylene), PMMA (polymethylmethacrylate), VAE (vinyl acetate-ethylene), PS (polystyrene), EPS (expanded polystyrene), XPS (extruded polystyrene), GPPS (general purpose polystyrene), HIPS (high impact polystyrene) and/or mixtures thereof.

11. A process according to claims 4 to 10, wherein the plastic material is a waste plastic material.

12. A process according to claims 4 to 11, wherein the concentration of plastic material based on the total weight of the final polymer emulsion is comprised between 0,5% and 50% by weight.

13. A process according to claims 4 to 12, wherein the plastic material is a bioplastic material made partially or totally from biobased resources.

14. A process according to claims 4 to 13, wherein the plastic material is fully dissolved before the polymerization.

15. The use the polymer according to claims 1 to 3 or a polymer obtained according to the process of claims 4 to 14 to produce coating, paint, primer, ink, adhesives such as pressure sensitive adhesive, textile and leather additive, paper additive, constructions additive.

16. A binder composition comprising a polymer according to claims 1 to 3 or a polymer obtained according to the process of claims 4 to 14.

17. The use of a binder composition according to claim 16 to produce coating, paint, primer, ink, varnish, textile and leather additive, construction additive, paper coating, paper impregnation, and pressure sensitive adhesive.
